(19)

Europäisches
Patentamt
European
Patent Office
Office européen
des brevets

(11) **EP 2 644 671 A2**

(12) **EUROPEAN PATENT APPLICATION**

(43) Date of publication:
**02.10.2013 Bulletin 2013/40**

(21) Application number: **13161187.3**

(22) Date of filing: **26.03.2013**

(51) Int Cl.:
*C09J 7/02* (2006.01)   *C08K 3/00* (2006.01)
*C09J 9/02* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **26.03.2012 JP 2012069521**

(71) Applicant: **NITTO DENKO CORPORATION
Ibaraki-shi, Osaka 567-8680 (JP)**

(72) Inventors:
• **Kataoka, Kenichi**
  **Osaka, 567-8680 (JP)**
• **Haruta, Hiromoto**
  **Osaka, 567-8680 (JP)**
• **Amano, Tatsumi**
  **Osaka, 567-8680 (JP)**

(74) Representative: **Potter Clarkson LLP
The Belgrave Centre
Talbot Street
Nottingham
NG1 5GG (GB)**

(54) **Surface protecting film**

(57)    The present invention provides a surface protecting film which can suppress rainbow unevenness attributed to itself, makes appearance inspection smooth, and is excellent in workability at the time of inspection of an optical member by a Crossed Nicols method by employing a surface protecting film having a specified degree of orientation in a specified width direction. The surface protecting film of the present invention has a pressure-sensitive adhesive layer on and at least one surface of a substrate, the substrate is a polyester film and polyester film has a degree of orientation in the width direction of 1.5 m in a range of 75 to 90°.

EP 2 644 671 A2

**Description**

Technical Field

The present invention relates to a surface protecting film used for the surface of an optical member or the like. The surface protecting film of the present invention can be used for protecting the surface of various kinds of optical films of a polarizing plate, a retardation plate, and the like. By being bonded to the surface of a liquid crystal display panel, the surface protecting film is also used for protecting various kinds of image display devices such as a liquid crystal display, an organic EL display, and PDP.

Description of the Related Art

An optical film such as a polarizing plate is used for a liquid crystal display panel and in order to protect the surface of a polarizing plate, a surface protecting film is usually bonded to the surface of a polarizing plate during the assembly of a liquid crystal cell.

Conventionally, those which have a pressure-sensitive adhesive layer formed on one surface of a biaxially stretched polyester film and which are used by bonding the pressure-sensitive adhesive layer surface to the polarizing plate surface have been used as the surface protecting film.

The polyester film is provided with excellent mechanical properties, heat resistance, electric properties, chemical resistance, and weather resistance by being biaxially stretched so that the polyester film has been used industrially in various fields.

The biaxially stretched polyester film is produced by a biaxially stretching method, e.g., stretching a resin film (unstretched film) formed in a sheet-like form in two axial directions crossing at right angles while heating the resin film. Methods known as a method for stretching an unstretched film are a successive biaxial stretching method and a simultaneous biaxial stretching method and the former is for stretching an unstretched film in the longitudinal (vertical) direction and thereafter stretching the film in the width (transverse) direction and the latter is for stretching an unstretched film simultaneously in two, vertical and transverse, directions.

Both of the a successive biaxial stretching method and the simultaneous biaxial stretching method are carried out by holding both end parts of an unstretched film in the width direction with a plurality of clips arranged in two rows and at the same time widening the distance (distance in the width direction) of the clips to stretch the unstretched film in the width (transverse) direction. In the simultaneous biaxial stretching method, simultaneously with the width (transverse) distance of the clips, the distance (distance in the vertical direction) of the clips in the longitudinal (vertical) direction of the film is widened to simultaneously stretch the film in two, vertical and transverse, directions.

In these biaxial stretching methods, a so-called Bowing phenomenon occurs; that is, deformation of the center part of the film in the width (transverse) direction precedes deformation of the rim parts in the width (transverse) direction or deformation of the film in the width (transverse) direction is delayed more than deformation of the rim parts in the same direction. In a transverse stretching step, the Bowing phenomenon that the center part of the film in the width (transverse) direction is protruded in the proceeding direction of the film as compared with the rim parts in the same direction occurs during an initial period of stretching, and the Bowing phenomenon that the center part of the film in the width (transverse) direction is protruded in the direction opposed to the proceeding direction of the film as compared with the rim parts in the same direction occurs during the period from the latter half of the stretching to a heating treatment step after the stretching. Such a Bowing phenomenon disturbs the uniformity of the physical properties of a polyester film in the width (transverse) direction and disturbs the molecular orientation distribution of the obtained polyester film in the width (transverse) direction to result in unevenness of the physical properties.

Under such circumstances, JP-B-39-29214 proposes production of a polyester film according to a heating treatment method by using a heating roll and Japanese Patent No. 2936688 proposes a method involving a cooling step between a transverse stretching step and a heating treatment step.

However, sufficient suppression of the unevenness of the physical properties in the parts other than the center part of a film is difficult even by these methods. In addition, owing to the unevenness of the physical properties, in the case of carrying out appearance inspection by a Crossed Nicols method in the state that a surface protecting film using the film is bonded to an optical film such as a polarizing plate, rainbow unevenness occurs, the inspection precision is lowered, the productivity is reduced, and a practical problem is caused.

[Patent publication 1] JP-B-39-29214
[Patent publication 2] Japanese Patent No. 2936688

SUMMARY OF THE INVENTION

To solve the problems with conventional surface protecting films, an object of the present invention is to provide a surface protecting film which can suppress rainbow unevenness attributed to itself, makes appearance inspection smooth, and is excellent in workability at the time of inspection of an optical member by a Crossed Nicols method by having a specified degree of orientation in a specified width direction.

Inventors of the present invention made various investigations for solving the problems, found the following surface protecting film, and consequently completed the present invention.

That is, a surface protecting film of the present invention has a pressure-sensitive adhesive layer on at least one surface of a substrate, the substrate is a polyester film and the polyester film has a degree of orientation in the width direction of 1.5 m in a range of 75 to 90°.

The surface protecting film of the present invention has a degree of orientation preferably in a range of 75 to 90°.

The surface protecting film of the present invention preferably has a total thickness of 5 to 150 $\mu$m.

In the surface protecting film of the present invention, the pressure-sensitive adhesive layer is preferably formed using an acryl-based pressure-sensitive adhesive.

In the surface protecting film of the present invention, the substrate preferably has an antistatic layer on a surface reverse to the surface having the pressure-sensitive adhesive layer.

An optical member of the present invention is preferably protected with the surface protecting film.

EFFECTS OF THE INVENTION

The present invention provides a surface protecting film which can suppress rainbow unevenness attributed to itself, makes appearance inspection smooth, and is excellent in workability at the time of inspection of an optical member by a Crossed Nicols method by employing a polyester film having a degree of orientation adjusted to be in a specified range in a specified width direction as a substrate and thus the present invention is useful.

DETAILED DESCRIPTION OF THE PREFERRED EMBODIMENTS

A surface protecting film of the present invention has a pressure-sensitive adhesive layer on at least one surface of a substrate, the substrate is a polyester film and the polyester film has a degree of orientation in the width direction of 1.5 m in a range of 75 to 90°, preferably 77 to 90°, and more preferably 79 to 90°. If the degree of orientation is in the above-mentioned range, the polyester film is a film with low orientation and in almost all portions other than the center part of the film, physical property unevenness (rainbow unevenness) can be suppressed, the appearance inspection precision can be improved, and further, the film can be used without being wasted, is thus excellent in productivity, and this aspect is preferred in view of practical applications.

A polyester (polyester film) used in the present invention is obtained by polymerizing a dicarboxylic acid component and a diol component, or monomer components mainly of a hydroxycarboxylic acid.

The dicarboxylic acid component is not particularly limited, but preferably an aromatic dicarboxylic acid and an aliphatic dicarboxylic acid in terms of mechanical strength.

Examples of the aromatic dicarboxylic acid include terephthalic acid, isophthalic acid, phthalic acid, 1,4-naphthalenedicarboxylic acid, 1,5-naphthalenedicarboxylic acid, 2,6-naphthalenedicarboxylic acid, 4,4'-diphenyldicarboxylic acid, 4,4'-diphenyl ether dicarboxylic acid, and 4,4'-diphenylsulfonedicarboxylic acid.

Examples of the aliphatic dicarboxylic acid include adipic acid, succinic acid, suberic acid, sebacic acid, and dodecanedioic acid. Especially, terephthalic acid and isophthalic acid are preferable. These monomer components may be used alone or in form of a mixture of two or more.

The diol component is not particularly limited and examples thereof include ethylene glycol, 1, 2- propanediol, 1, 3- propanediol, neopentyl glycol, 1, 3- butanediol, 1, 4- butanediol, 1, 5- pentanediol, 1, 6- hexanediol, 1, 2- cyclohexanedimethanol, 1, 3- cyclohexanedimethanol, 1, 4- cyclohexanedimethanol, diethylene glycol, triethylene glycol, polyalkylene glycol, and 2, 2- bis (4- hydroxyethoxyphenyl) propane. Especially, ethylene glycol is preferably used. These monomer components may be used alone or in form of a mixture of two or more.

The hydroxycarboxylic acid component is not particularly limited and examples thereof include p- hydroxybenzoic acid and 6- hydroxy- 2- naphthoic acid. These monomer components may be used alone or in form of a mixture of two or more.

A polyester to be used for a polyester film in the present invention is preferably poly(ethylene terephthalate) (PET), poly(ethylene naphthalate) (PEN), a copolymer of ethylene terephthalate and ethylene isophthalate, poly(butylene terephthalate) (PBT) and a copolymer thereof, poly(butylene naphthalate) (PBN) and a copolymer thereof, poly (hexamethylene terephthalate) and a copolymer thereof, and poly (hexamethylene naphthalate) and a copolymer thereof and particularly preferably poly(ethylene terephthalate) (PET).

The polyester in the present invention can be produced by a conventionally known method. Examples thereof include a production method of causing direct esterification reaction of a dicarboxylic acid component with a diol component and thereafter, polycondensing the reaction product while removing the excess diol component by heating under reduced pressure; and a production method of using a dialkyl ester as the dicarboxylic acid component, causing interesterification reaction of the dialkyl ester with a diol component, and thereafter polycondensing the reaction product as described above.

If necessary, a conventionally known catalyst may be used as a reaction catalyst. Examples of those used include alkali metals, alkaline earth metals, manganese, cobalt, zinc, antimony, germanium, and titanium compounds.

A conventionally known method can be employed as a method for producing a polyester film in the present invention without any limitation as long as the method can produce a polyester film with a low degree of orientation (degree of orientation adjusted in a narrow range) that satisfies a degree of orientation in the width direction of 1.5 m in a range of 75 to 90°. It is preferred in actual applications to employ a production method for providing a polyester film with such low orientation that suppresses unevenness of the physical properties (rainbow unevenness) also in almost all portions other than the center part of the film, since precision of appearance inspection can be improved, the film is made usable without being wasted, and thus the productivity is excellent. In the present invention, "width direction of 1.5 m" means that the degree of orientation in a range of 1.5 m in the width (transverse) direction is adjusted in a range of 75 to 90° in the polyester film production process.

A method to be employed as a method for producing a polyester film with such low orientation as to satisfy the degree of orientation in the width direction of 1.5m in a range of 75 to 90° and usable in the present invention is, for example, a film formation method involving biaxial stretching using a tenter (transverse stretching machine). More specifically, a melted polyester is supplied to an extruder and melt-extruded into a sheet-like form using a T-shaped cap or the like and thereafter cooled and solidified on a casting drum to obtain a non-stretched (unstretched) film. The non-stretched film is led to a tenter as it is or after being stretched in a longitudinal (vertical) direction at a stretching temperature of 80°C to lower than 120°C to 2.5 to 5 times in one step or in multiple steps. In terms of suppression of the Bowing phenomenon and production of a polyester film with low orientation (a degree of orientation in a range of 75 to 90°), it is preferable to adjust the stretching temperature to 100°C or higher and the stretching magnification to 3.5 times or less.

Next, it is necessary to carry out transverse stretching of the polyester film in the width (transverse) direction while holding the end parts of the film with clips in the tenter and at the same time to carry out relaxing treatment in the longitudinal (vertical) direction by shrinking the distance of clips on rails by 1 to 20%. In this case, the transverse stretching temperature is 80 to 110°C and the stretching magnification is 3 to 5 times.

In terms of suppression of the Bowing phenomenon and worsening of thickness unevenness, it is preferable to adjust the transverse stretching temperature to 80 to 100°C and the transverse stretching magnification to 3.7 to 5 times.

In the case that the non-stretched (unstretched) film is led to a tenter, it is also preferred to carry out successive biaxial stretching by carrying out transverse stretching in the width (transverse) direction same as described above and thereafter carrying out vertical stretching at a stretching temperature of 80 to 120°C and a stretching magnification of 2.5 to 5 times in the longitudinal (vertical) direction by widening the distance of clips in the longitudinal (vertical) direction.

In the present invention, before the next heating step is carried out after completion of the film stretching, it is preferable to provide a cooling step at a glass transition temperature (Tg) or lower and it is more preferable to provide a cooling step at 70°C or lower. It is still more preferable that the heating treatment step is carried out by dividing the step into three temperature regions; that is, a first heating treatment section (transverse stretching temperature + 40°C or lower), a successive second heating treatment section (200 to 240°C) and simultaneous transverse stretching by 1 to 20%, and a final third heating treatment section (transverse stretching temperature to the second heating treatment section) and simultaneous relaxing treatment by 1 to 20% in the width (transverse) direction. It is preferred to execute the step since the Bowing phenomenon can be suppressed and a polyester film with low orientation can be obtained easily.

If necessary, a polyester used in the present invention may be mixed with a flame retardant, a heat stabilizer, an antioxidant, an ultraviolet absorbing agent, an antistatic agent, a pigment, a fatty acid ester, an organic lubricant such as a wax, or a defoaming agent such as siloxane. As a lubricant, organic and inorganic lubricants may be used. Their shapes may be particles such as agglomerated particles, truly spherical particles, beaded particles, star-shaped particles, and scaly particles. The material of the lubricant may be, as an inorganic lubricant, silicon oxide, calcium carbonate, titanium oxide, alumina, zirconia, aluminum silicate, mica, clay, talc, magnesium oxide, and the like and, as an organic lubricant, resins such as polyimide resins, olefin or modified olefin resins, crosslinked or uncrosslinked polystyrene resins, crosslinked or uncrosslinked acrylic resins, fluororesins, silicon resins, and the like. Examples of an organic lubricant also include various kinds of amide compounds such as stearic acid amide, oleic acid amide, and fumaric acid amide.

If necessary, the surface of the polyester film, which is the substrate, may be subjected to common surface treatment in order to improve adhesion to the pressure-sensitive adhesive layer, the antistatic layer, and the like and may be treated by, for example, corona discharge treatment, plasma treatment, ultraviolet radiation treatment, acid treatment, alkali treatment, or coating with an undercoating agent.

The thickness of the polyester film, which is the substrate, may be properly selected and for example, it is preferably 150 $\mu$m or thinner, more preferably about 5 to 100 $\mu$m, and especially preferably about 10 to 50 $\mu$m. It is preferred that the thickness is in the above-mentioned range since the workability and appearance inspection property are excellent.

Specific examples of commercialized products of a polyester film with a degree of orientation in the width direction of 1.5 m in a range of 75 to 90° include T190 series manufactured by Mitsubishi Plastics, Inc., and GFK series manufactured by Teijin DuPont Films.

The surface protecting film of the present invention has a pressure- sensitive adhesive layer on at least one surface of the substrate. A pressure- sensitive adhesive composing the pressure- sensitive adhesive layer is not particularly limited and pressure- sensitive adhesives containing a base polymer properly selected from, for example, (meth) acryl- based polymers, silicone polymers, polyesters, polyurethanes, polyamides, polyethers, and fluorine and rubber polymers may be used.

Particularly, the pressure- sensitive adhesive layer used for the present invention is preferably formed using an acryl- based pressure- sensitive adhesive. The acryl- based pressure- sensitive adhesive is preferable since it is excellent in optical transparency, provided with pressure- sensitive properties such as proper wettability, cohesive property, and tackiness, and excellent in weather resistance and heat resistance.

Preferable embodiments of the acryl- based pressure- sensitive adhesive are those which contain a (meth) acryl- based polymer containing a (meth) acryl- based monomer having an alkyl group of 1 to 14 carbon atoms as a main component. Additionally, a (meth) acryl- based polymer in the present invention means an acryl- based polymer and/or a methacryl- based polymer and (meth) acrylate means acrylate and/or methacrylate.

The (meth) acryl- based polymer containing (meth) acrylate having an alkyl group of 1 to 14 carbon atoms as a main component contains the (meth) acrylate having an alkyl group of 1 to 14 carbon atoms in an amount of preferably 50 to 99.9 wt. %, more preferably 60 to 99 wt. %, and furthermore preferably 70 to 98 wt. % in total 100 wt. % of the entire structural units (all of monomer components) of the (meth) acryl- based polymer. It is preferred that the monomer component is in the above- mentioned range since a pressure- sensitive adhesive composition used for forming the pressure- sensitive adhesive (layer) can be provided with proper wettability and cohesive strength.

Specific examples of the (meth) acrylate having an alkyl group of 1 to 14 carbon atoms include methyl (meth) acrylate, ethyl (meth) acrylate, n- butyl (meth) acrylate, sec- butyl (meth) acrylate, tert- butyl (meth) acrylate, isobutyl (meth) acrylate, hexyl (meth) acrylate, 2- ethylhexyl (meth) acrylate, n- octyl (meth) acrylate, isooctyl (meth) acrylate, n- nonyl (meth) acrylate, isononyl (meth) acrylate, n- decyl (meth) acrylate, isodecyl (meth) acrylate, n- dodecyl (meth) acrylate, n- tridecyl (meth) acrylate, and n- tetradecyl (meth) acrylate.

Especially, because of use as a surface protecting film, preferable examples include (meth) acrylates having an alkyl group of 6 to 14 carbon atoms such as hexyl (meth) acrylate, 2- ethylhexyl (meth) acrylate, n- octyl (meth) acrylate, isooctyl (meth) acrylate, n- nonyl (meth) acrylate, isononyl (meth) acrylate, n- decyl (meth) acrylate, isodecyl (meth) acrylate, n- dodecyl (meth) acrylate, n- tridecyl (meth) acrylate, and n- tetradecyl (meth) acrylate. Use of a (meth) acrylate having an alkyl group of 6 to 14 carbon atoms makes it easy to control the adhesion to an adherend to be low and to obtain a surface protecting film excellent in the re- peeling property.

Because of ease of keeping good balance of adherability, another polymerizable monomer for making Tg to be 0°C or lower (usually- 100°C or higher) and adjusting the glass transition temperature and the peeling property of the (meth) acryl- based polymer may be used as another polymerizable monomer component to an extent that the effects of the present invention are not adversely affected.

The polymerizable monomer used in the (meth) acryl- based polymer is not particularly limited as long as it is a component other than a (meth) acrylate having a monomer containing, for example, a carboxyl group, a sulfonate group, a phosphate group, and an acid anhydride group. Since crosslinking is controlled easily, a hydroxyl group- containing (meth) acrylate (a hydroxyl group- containing (meth) acryl- based monomer) is preferably used.

Examples of the hydroxyl group- containing monomer include 2- hydroxyethyl (meth) acrylate, 2- hydroxypropyl (meth) acrylate, 4- hydroxybutyl (meth) acrylate, 6- hydroxyhexyl (meth) acrylate, 8- hydroxyoctyl (meth) acrylate, 10- hydroxydecyl (meth) acrylate, 12- hydroxylauryl (meth) acrylate, (4- hydroxymethylcyclohexyl) methyl acrylate, N- methylol (meth) acrylamide, vinyl alcohol, allyl alcohol, 2- hydroxyethyl vinyl ether, 4- hydroxybutyl vinyl ether, and diethylene glycol monovinyl ether.

In the case the (meth) acryl- based polymer contains the hydroxyl group- containing (meth) acryl- based monomer, the content of the hydroxyl group- containing (meth) acryl- based monomer in the total 100 wt. % of all of the structural units (all monomer components) of the (meth) acryl- based polymer is preferably 15 wt. % or less, more preferably 1 to 13 wt. %, furthermore preferably 2 to 11 wt. %, and most preferably 3.5 to 10 wt. %. If it is in the above- mentioned range, the balance between the wettability and cohesive strength of a pressure- sensitive adhesive composition can be controlled easily and therefore, it is preferable.

Examples of those used properly as another copolymerizable monomer other than the above- mentioned monomer in the (meth) acryl- based polymer include a cohesive strength- and- heat resistance improving component such as a cyano group- containing monomer, a vinyl ester monomer or an aromatic vinyl monomer and a functional group- containing component such as an amide group- containing monomer, an imide group- containing monomer, an amino group- containing monomer, an epoxy group- containing monomer, N- acryloylmorpholine, or a vinyl ether monomer for adhesive strength improvement and as a crosslinking base point. These monomer components may be used alone or in form of a mixture of two or more.

Examples of the cyano group-containing monomer include acrylonitrile and methacrylonitrile.

Examples of the vinyl ester monomer include vinyl acetate, vinyl propionate, and vinyl laurate.

Examples of the aromatic vinyl monomer include styrene, chlorostyrene, chloromethylstyrene, $\alpha$-methylstyrenhe, and other substituted styrenes.

Examples of the amide group- containing monomer include acrylamide, methacrylamide, diethylacrylamide, N- vinylpyrrolidone, N, N- dimethylacrylamide, N, N- dimethylmethacrylamide, N, N- diethylacrylamide, N, N- diethylmethacrylamide, N, N'- methylenebisacrylamide, N, N- dimethylaminopropylacrylamide, N, N- dimethylaminopropylmethacrylamide, and diacetone acrylamide.

Examples of the imide group-containing monomer include cyclohexylmaleimide, isopropylmaleimide, N-cyclohexylmaleimide, and itaconimide.

Examples of the amino group- containing monomer include aminoethyl (meth) acrylate, N, N- dimethylaminoethyl (meth) acrylate, and N, N- dimethylaminopropyl (meth) acrylate.

Examples of the epoxy group- containing monomer include glycidyl (meth) acrylate, methylglycidyl (meth) acrylate, and allyl glycidyl ether.

Examples of the vinyl ether monomer include methyl vinyl ether, ethyl vinyl ether, and isobutyl vinyl ether.

Other polymerizable monomers other than the hydroxyl group- containing (meth) acryl- based monomer may be used alone or in form of a mixture of two or more. The content of the monomer is preferably 0 to 40 wt. %, more preferably 0 to 35 wt. %, furthermore preferably 0 to 30 wt. % in the total amount of structural units (all monomer components) of the (meth) acryl- based polymer. Use of other polymerizable monomers in the range makes it possible to appropriately control the good re- peeling property.

The weight average molecular weight (Mw) of the (meth) acryl-based polymer is 100,000 to 5,000,000, preferably 200,000 to 4,000,000, and furthermore preferably 300,000 to 3, 000, 000. If the weight average molecular weight is less than 100,000, there is a tendency that adhesive residue is generated due to reduction in the cohesive strength of the pressure-sensitive adhesive composition. On the other hand, if the weight average molecular weight exceeds 5,000,000, there is a tendency that fluidity of the polymer is reduced, wettability to a polarizing plate becomes insufficient, and that it becomes a cause of blistering which is generated between a polarizing plate and a pressure-sensitive adhesive composition layer of a pressure-sensitive adhesive sheet (surface protecting film). The weight average molecular weight is a value measured by GPC (gel permeation chromatography).

The glass transition temperature (Tg) of the (meth) acryl- based polymer is preferably 0°C or lower, more preferably- 10°C or lower, furthermore preferably- 41°C or lower, particularly preferably- 51°C or lower, and most preferably- 61°C or lower (usually- 100°C or higher) . If the glass transition temperature is higher than 0°C, a polymer does not easily flow and wettability to a polarizing plate becomes insufficient and thus it tends to be a cause of blistering generated between a polarizing plate and a pressure- sensitive adhesive composition layer of a pressure- sensitive adhesive sheet (surface protecting film) . In particular, adjustment of the glass transition temperature to- 61°C or lower makes it easy to obtain a pressure- sensitive adhesive composition excellent in wettability to a polarizing plate and easy peeling property. The glass transition temperature of the (meth) acryl- based polymer can be adjusted within the above-mentioned range by appropriately varying the monomer components to be used and the composition ratio.

A method of polymerizing the (meth) acryl- based polymer is not particularly limited and a conventionally known polymerization method such as solution polymerization, emulsion polymerization, bulk polymerization, or suspension polymerization may be employed. The solution polymerization is more preferred in view of the workability and specific aspects such as low staining to an object to be protected. The obtained polymer may be any one selected from a random copolymer, a block copolymer, an alternate copolymer, and a graft copolymer.

It is preferable for the surface protecting film of the present invention that the pressure- sensitive adhesive composition which can form the pressure- sensitive adhesive layer contains a crosslinking agent. Selection of the structural unit and component ratio of the (meth) acryl- based polymer, selection of the crosslinking agent, appropriate control of the addition ratio of the crosslinking agent, and crosslinking make it possible to obtain a pressure- sensitive adhesive layer with more excellent heat resistance.

The crosslinking agent used may be an isocyanate compound, an epoxy compound, a melamine resin, an aziridine derivative, a metal chelate compound, and the like and particularly, use of an isocyanate compound is preferable. These crosslinking agents may be used alone or in form of a mixture of two or more.

Examples of the isocyanate compound include aliphatic polyisocyanates such as trimethylene diisocyanate, butylene diisocyanate, hexamethylene diisocyanate (HDI), and dimer acid diisocyanate; aliphatic isocyanates such as cyclopentylene diisocyanate, cyclohexylene diisocyanate, and isophorone diisocyanate (IPDI); aromatic isocyanates such as 2,4-tolylene diisocyanate, 4,4'-diphenylmethane diisocyanate, and xylylene diisocyanate (XDI); and modified polyisocyanates obtained by modifying the isocyanates with an allophanate bond, a biuret bond, an isocyanurate bond, a uretdione bond, a urea bond, a carbodiimide bond, a uretonimine bond, and oxadiazinetrione bond, or the like. Examples of commercially available products include trade name TAKENATE 300S, TAKENATE 500, TAKENATE D165N, and TAKENATE D178N (all manufactured by Takeda Pharmaceutical Co., Ltd.), Sumidur T80, Sumidur L, and Desmodur N3400 (all manufactured by Sumitomo Bayer Urethane Co., Ltd.); and Millionate MR, Millionate MT, Coronate L, Coronate HL, and Coronate HX (all manufactured by Nippon Polyurethane Industry Co., Ltd.). These isocyanate compounds may be used alone or in form of a mixture of two or more and it is also possible to use a bifunctional isocyanate compound and a trifunctional isocyanate compound in combination. Combination use of crosslinking agents makes it possible to achieve both adherability and resilient resistance and to obtain a surface protecting film more excellent in the pressure-sensitive adhesive property (adhesion reliability).

Examples of the epoxy compound include N, N, N', N'- tetraglycidyl- m- xylenediamine (trade name TETRAD-X, manufactured by Mitsubishi Gas Chemical Company, Inc.) and 1, 3- bis (N, N- diglycidylaminomethyl) cyclohexane (trade name TETRAD- C, manufactured by Mitsubishi Gas Chemical Company, Inc.) .

Examples of the melamine resin include hexamethylolmelamine. Examples of the aziridine derivative include trade name HDU, TAZM, and TAZO (all manufactured by Sogo Pharmaceutical Co., Ltd.).

Examples of the metal chelate compound include a metal component such as aluminum, iron, tin, titanium and nickel and a chelate component such as acetylene, methyl acetoacetate, and ethyl lactate.

The content of the crosslinking agent used in the present invention to 100 parts by weight of the (meth) acryl-based polymer is preferably 0.01 to 10 parts by weight, more preferably 0.1 to 8 parts by weight, and furthermore preferably 0.5 to 5 parts by weight. If the content is less than 0.01 parts by weight, the crosslinking agent may insufficiently form a crosslink, so that the cohesive strength of the pressure- sensitive adhesive composition may be low, which may make it impossible to obtain sufficient heat resistance or tend to cause adhesive residue. On the other hand, if the content is more than 10 parts by weight, the polymer may have a high cohesive strength to reduce fluidity, so that the wettability to a polarizing plate may be insufficient, which may tend to cause blister between the polarizing plate and the pressure-sensitive adhesive composition layer. These crosslinking agents may be used alone or in form of a mixture of two or more.

Further, the pressure- sensitive adhesive composition used for the surface protecting film of the present invention may properly contain other conventionally known additives, for example, an antistatic agent such as an ionic compound, a powder of a coloring agent, a pigment or the like, a surfactant, a plasticizer, a tackifier, a low molecular weight polymer, a surface lubricant, a leveling agent, an antioxidant, a corrosion preventing agent, a photostabilizer, an ultraviolet absorbing agent, a polymerization inhibitor, a silane coupling agent, an inorganic or organic filler, a metal powder, granules, foils and others, according to utility.

Any conventionally known method may be employed as a method for forming the pressure-sensitive adhesive layer and examples of the method include conventionally known pressure-sensitive adhesive sheet (surface protecting film) production methods such as a method for forming a pressure-sensitive adhesive layer by applying a pressure-sensitive adhesive composition (a pressure-sensitive adhesive composition solution obtained by dissolving the pressure-sensitive adhesive composition in a solvent or a thermally melted solution) to the substrate and drying the composition; a method for forming a pressure-sensitive adhesive layer by applying the pressure-sensitive adhesive composition to the substrate, drying the composition, and further carrying out crosslinking treatment; a method by moving and depositing (transferring) a pressure-sensitive adhesive layer applied to and formed on a release liner; a method by extrusion and application of a pressure-sensitive adhesive layer formation materials to a substrate; a method by extrusion of a bi- or multi-layer of a substrate and a pressure-sensitive adhesive layer; and a method by monolayer lamination of a pressure-sensitive adhesive layer on a substrate. In the present invention, a film includes a tape, a sheet, and the like.

Any conventionally known method may be employed as a method for applying the pressure-sensitive adhesive composition (solution) and examples thereof include roll coating, gravure coating, reverse roll coating, roll blush coating, air knife coating, spray coating, and extrusion coating using a die coater.

The release liner is not particularly limited and any conventionally known one can be employed adequately. For example, one which is obtained by forming a release coat layer on at least one surface of a substrate (substrate for release liner) can be used. The substrate for release liner employed may be monolayer and multi-layer substrates.

Various kinds of thin sheets such as a plastic film, paper, a foam, and a metal foil may be used as the substrate for release liner and particularly preferable one is a plastic film. Examples of those used as a raw material of the plastic film include polyesters such as poly(ethylene terephthalate); polyolefins such as polypropylene and ethylene-propylene copolymers; and thermoplastic resins such as poly(vinyl chloride).

The thickness of the substrate for release liner may be selected adequately according to the purpose.

Formation of the pressure-sensitive adhesive layer is not particularly limited and for example, the temperature for drying after application of a pressure-sensitive adhesive composition (solution) is normally 60 to 150°C and preferably 70 to 140°C.

It is preferable for the surface protecting film of the present invention that the substrate has an antistatic layer on the surface reverse to the surface having the pressure-sensitive adhesive layer. It is preferred that the surface protecting film has an antistatic layer since electrification of the surface protecting film itself can be suppressed and dust is hardly adsorbed.

The antistatic layer may be formed by a method for applying an antistatic resin containing an antistatic agent and a resin component, a conductive polymer, or a conductive resin containing a conductive substance or a method for depositing or plating a conductive substance.

Examples of an antistatic agent contained in the antistatic resin include cationic antistatic agents having cationic functional groups such as quaternary ammonium salts, pyridinium salts, and primary, secondary, and tertiary amino groups; anionic antistatic agents having anionic functional groups such as sulfonic acid salts, sulfuric acid ester salts, phosphonic acid salts, and phosphoric acid ester salts; amphoteric antistatic agents such as alkyl betaine and derivatives thereof, imidazoline and derivatives thereof, and alanine and derivatives thereof; nonionic antistatic agents such as amino alcohol and derivatives thereof, glycerin and derivatives thereof, polyethylene glycol and derivatives thereof; and ion conductive polymers obtained by copolymerizing monomers having the cationic, anionic, and amphoteric ion conductive groups. These compounds may be used alone or in form of a mixture of two or more.

Examples of the cationic antistatic agents include (meth)acrylate copolymers having a quaternary ammonium group such as alkyltrimethylammonium salt, acyloylamidopropyltrimethylammonium sulfate, alkylbenzylmethylammonium salt, acyl chloride choline, and poly(dimethylaminoethyl methacrylate); styrene copolymers having a quaternary ammonium group such as polyvinylbenzyltrimethylammonium chloride; and diallylamine copolymers having a quaternary ammonium group such as polydiallyldimethylammonium chloride. These compounds may be used alone or in form of a mixture of two or more.

Examples of the anionic antistatic agents include alkylsulfonic acid salts, alkylbenzenesulfonic acid salts, alkylsulfuric acid ester salts, alkylethoxysulfuric acid ester salts, alkylphosphoric acid ester salts, and sulfonic acid group-containing styrene copolymers. These compounds may be used alone or in form of a mixture of two or more.

Examples of the amphoteric antistatic agents include alkyl betaine, alkylimidazolium betaine, and carbobetaine graft copolymers. These compounds may be used alone or in form of a mixture of two or more.

Examples of the nonionic antistatic agents include fatty acid alkylolamides, di (2- hydroxyethyl) alkylamines, polyoxyethylene alkylamines, fatty acid glycerin esters, polyoxyethylene glycol fatty acid esters, sorbitan fatty acid esters, polyoxysorbitan fatty acid esters, polyoxyethylene alkyl phenyl ethers, polyoxyethylene alkyl ethers, polyethylene glycols, polyoxyethylenediamines, copolymers of polyethers, polyesters and polyamides, and methoxy polyethylene glycol (meth) acrylate. These compounds may be used alone or in form of a mixture of two or more.

Examples of the conductive polymers include polyaniline, polypyrrole, and polythiophene. These compounds may be used alone or in form of a mixture of two or more.

Examples of the conductive substances include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, and alloys and mixtures of these.

Those usable as a resin component used for the antistatic resins and conductive resins include widely commercialized resins such as polyesters, acrylic, polyvinyl, urethane, melamine, and epoxy resins. In the case of a polymer type antistatic agent, there is no need to add a resin component. It is also possible to add, as a crosslinking agent, methylol or alkylol melamine type, urea type, glyoxal type, and acrylamide type compounds, epoxy compounds, and isocyanate compounds to the antistatic resin component.

The antistatic layer may be formed by, for example, diluting the antistatic resin, conductive polymer, and conductive resin in a solvent such as an organic solvent or water and applying the obtained coating solution to a plastic film and drying the coating solution.

Examples of the organic solvent used for forming the antistatic layer include methyl ethyl ketone, acetone, ethyl acetate, tetrahydrofuran, dioxane, cyclohexanone, n-hexane, toluene, xylene, methanol, ethanol, n-propanol, and isopropanol. These solvents may be used alone or in form of a mixture of two or more.

A conventionally known coating method may be employed adequately as the coating method for forming the antistatic layer and specific examples thereof include roll coating, gravure coating, reverse roll coating, roll blush coating, spray coating, air knife coating, immersion and a curtain coating method.

Examples of the deposition or plating method for the conductive substances include vacuum deposition, sputtering, ion plating, chemical vapor deposition, spray pyrolysis, chemical plating, and electroplating methods.

The thickness of the antistatic resin layer, conductive polymer, and conductive resin is usually about 0.001 to 5 $\mu$m and preferably about 0.03 to 1 $\mu$m. If it is within the above-mentioned range, the possibility of deteriorating the heat resistance, solvent resistance, and flexibility of the plastic film is low and therefore, it is preferable.

The thickness of the conductive substance layer is usually about 0.002 to 1 $\mu$m and preferably about 0.005 to 0.5 $\mu$m. If it is within the above-mentioned range, the possibility of deteriorating the heat resistance, solvent resistance, and flexibility of the plastic film is low and therefore, it is preferable.

The surface protecting film of the present invention has a degree of orientation preferably in a range of 75 to 90°, more preferably in a range of 77 to 90°, and most preferably in a range of 79 to 90°. If it is within the range, low orientation property is provided, that is, the degree of orientation is adjusted in a narrow range so that occurrence of rainbow unevenness is suppressed and appearance inspection can be carried out smoothly in the case appearance inspection is carried out by a Crossed Nicols method in the state that the surface protecting film is bonded to an optical film such as a polarizing plate and the surface protecting film can be used without lowering the inspection precision and therefore, it is preferable. Additionally, an acryl-based pressure-sensitive adhesive is preferably used for the pressure-sensitive adhesive layer and a reason for that is that the adhesive is excellent in the pressure-sensitive adhesive property and transparency and also excellent in the appearance inspection precision improvement and productivity, and the adhesive is thus useful. The antistatic layer is thin in the thickness and does not affect the degree of orientation.

The total thickness of the surface protecting film of the present invention is preferably 1 to 150 $\mu$m, more preferably 3 to 120 $\mu$m, and most preferably 5 to 100 $\mu$m. If it is in the range, the surface protecting film is excellent in the pressure-sensitive adhesive property, workability, and appearance property and is preferable. The total thickness means the total of the thicknesses of all the layers including the substrate, the pressure-sensitive adhesive layer, an antistatic layer, and the like.

An optical member of the present invention is preferably protected with the surface protecting film. Use of the surface protecting film can suppress rainbow unevenness attributed to the surface protecting film at the time of inspection of the optical member using a Crossed Nicols method, make it possible to smoothly carry out appearance inspection of the optical member and improve the workability, and is thus advantageous.

Examples which specifically show the construction and effect of the present invention will be described below. However, the present invention is not limited thereto. Evaluation items in examples were measured by the following procedure.

<Measurement of Weight Average Molecular Weight>

A weight average molecular weight was measured using a GPC apparatus (HLC-8220GPC manufactured by Tosoh Corporation). Measuring conditions are as follows.

Sample concentration: 0.2wt% (THF solution)
Sample injection amount: 10$\mu$l
Eluent: THF
Flow rate: 0.6ml/min
Measuring temperature: 40°C
Column:

Sample column;
TSKguard column SuperHZ-H(1 column)+TSK gel Super HZM-H (2 columns)
Reference column;
TSK gel SuperH-RC(1 column)

Detector: Refractive index detector (RI)
A molecular weight was obtained in terms of polystyrene.

<Theoretical Value of Glass Transition Temperature>

A glass transition temperature Tg (°C) was determined by the following equation using the following reference values as a glass transition temperature Tgn (°C) of a homopolymer of each monomer.

$$\text{Equation: } 1/(Tg + 273) = \Sigma[Wn/(Tgn + 273)]$$

[where Tg (°C) represents a glass transition temperature of a copolymer, Wn (- ) represents a weight fraction of each monomer, Tgn (°C) represents a glass transition temperature of a homopolymer of each monomer, and n represents a kind of each monomer]
Reference values:

2-ethylhexyl acrylate (2EHA): -70°C
2-hydroxyethyl acrylate (2HEA): -15°C

"Synthesis and Design of Acrylic Resin and Development of New Applications" (published by Publishing Department of Chuo Keiei Kaihatsu Center) and "Polymer Handbook" (John Wiley & Sons) were referred for literature values.

<Measurement of Glass Transition Temperature>

A glass transition temperature Tg (°C) was determined by the method described below using a dynamic viscoelasticity measurement system (ARES manufactured by Rheometric Scientific Inc.).
Sheets of a (meth) acryl-based polymer having a thickness of 20 $\mu$m were laminated into a thickness of about 2 mm, and this was punched into $\phi$7.9 mm to prepare a cylindrical pellet, and this was used as a sample for measuring a glass transition temperature.
The measuring sample was fixed on a jig of a $\phi$7.9 mm parallel plate and temperature dependency of loss elastic modulus G" was measured using the dynamic viscoelasticity measuring apparatus, and a temperature at which the resulting G" curve became a maximum was adopted as a glass transition temperature (°C).
Measuring conditions are as follows.

Measurement: shear mode
Temperature range: -70°C to 150°C
Temperature raising rate: 5°C/min
Frequency: 1 Hz

[Example 1]

Preparation of antistatic-treated film

An antistatic agent solution was prepared by diluting 10 parts by weight of an antistatic agent (Microsolver RMd-142, manufactured by SOLVEX Co., Ltd., containing, as main components, tin oxide and a polyester resin) with a mixed solvent containing 30 parts by weight of water and 70 parts by weight of methanol.
The obtained antistatic agent solution was applied to a biaxially stretched poly(ethylene terephthalate) (PET) film (T190-38, manufactured by Mitsubishi Plastics, Inc., thickness: 38 $\mu$m, degree of orientation: 83°) using a Meyer bar, followed by drying at 130°C for 1 minute to remove the solvent and to form an antistatic layer (thickness: 0.2 $\mu$m), and thus an antistatic-treated film was prepared.

Preparation of acryl-based polymer

A four-neck flask equipped with a stirring blade, a thermometer, a nitrogen gas introduction tube, and a condenser was charged with 200 parts by weight of 2-ethylhexyl acrylate (2EHA) , 8 parts by weight of 2-hydroxyethyl acrylate (2HEA) and 0.4 parts by weight of 2,2'-azobisisobutyronitrile as a polymerization initiator, and 312 parts by weight of ethyl acetate was charged and nitrogen gas was introduced under a condition of stirring mildly. Then, polymerization reaction was performed for 6 hours while the liquid temperature in the flask being kept at about 65°C to prepare an acryl-based polymer solution (40 wt.%). This acryl-based polymer had a weight average molecular weight of 540,000 and a glass transition temperature (Tg) of -68°C.

Preparation of pressure-sensitive adhesive solution

The acryl-based polymer solution (40 wt.%) was diluted to 20 wt.% with ethyl acetate. Then, 100 parts by weight of the obtained solution was mixed and stirred with 1.0 part by weight of trimethylolpropane/tolylene diisocyanate (CORONATE L, manufactured by Nippon Polyurethane Industry Co., Ltd., 75 wt.%) as a crosslinking agent and 0.4 parts by weight of dibutyltin dilaurate (1 wt.% ethyl acetate solution) as a crosslinking catalyst to obtain an acryl-based pressure-sensitive adhesive solution.

Preparation of surface protecting film

The acryl-based pressure-sensitive adhesive solution was applied to the opposite surface to the antistatic-treated surface of the antistatic-treated film and heated at 130°C for 2 minutes to form a 20 $\mu$m thick pressure-sensitive adhesive layer. Next, a poly(ethylene terephthalate) film (release liner, thickness: 25 $\mu$m) with one side treated with silicone was provided, and the silicone-treated surface of the poly (ethylene terephthalate) film was bonded to the surface of the pressure-sensitive adhesive layer to prepare a surface protecting film (degree of orientation: 83°).

[Example 2]

A surface protecting film (degree of orientation: 87°) was prepared in the same manner as that in Example 1, except that a biaxially stretched poly(ethylene terephthalate) (PET) film (GFK 38, manufactured by Teij in DuPont Films, thickness: 38 $\mu$m, degree of orientation: 87°) was used in place of the poly(ethylene terephthalate) (PET) film (T190-38, manufactured by Mitsubishi Plastics, Inc., thickness: 38 $\mu$m, degree of orientation: 83°) as a substrate in Example 1.

[Comparative Example 1]

A surface protecting film (degree of orientation: 55°) was prepared in the same manner as that in Example 1, except that a biaxially stretched poly(ethylene terephthalate) (PET) film (T100-38, manufactured by Mitsubishi Plastics, Inc., thickness: 38 $\mu$m, degree of orientation: 55°) was used in place of the poly(ethylene terephthalate) (PET) film (T190-38, manufactured by Mitsubishi Plastics, Inc., thickness: 38 $\mu$m, degree of orientation: 83°) as a substrate in Example 1.

The surface protecting films obtained in examples and comparative example were subjected to the following evaluations. The evaluation results are shown in Table 1.

<Degree of orientation of polyester film>

Using RETS-100 manufactured by Otsuka Electronics Co., Ltd., orientation measurement was carried out at 5 points in total at equal intervals (37.5 cm) in the width (transverse) direction (1.5 m) for the poly(ethylene terephthalate) (PET) films used for substrates in examples and comparative example and the minimum value was defined as the degree of orientation (°).

<Degree of orientation of surface protecting film>

Using RETS-100 manufactured by Otsuka Electronics Co., Ltd., orientation measurement was carried out at 5 points in total at equal intervals (37.5 cm) in the width (transverse) direction (1.5 m) for the surface protecting films after peeling the release liners from the surface protecting films of examples and comparative example and the minimum value was defined as the degree of orientation (°).

<Rainbow unevenness (Crossed Nicols method)>

Each of the surface protecting films obtained in examples and comparative example was set between two polarizing plates (SEG 1423DU, manufactured by Nitto Denko Corporation) in a Crossed Nicols state in a manner that the MD (vertical direction) of the surface protecting film and the transmission axis of one polarizing plate were in parallel to each other and  occurrence of rainbow unevenness was visually observed when light of a fluorescent lamp was radiated from the lower side of the polarizing plates.

○: No rainbow unevenness occurred

×: Rainbow unevenness occurred

[Table 1]

| Evaluation results | | Degree of orientation (°) | | Rainbow unevenness |
|---|---|---|---|---|
| | | Substrate itself | Surface protecting film | |
| Example | 1 | 83 | 83 | ○ |
| | 2 | 87 | 87 | ○ |
| Comparative Example | 1 | 55 | 55 | × |

Remark) In Table 1, the surface protecting film means the entire body of the substrate, the antistatic film having the antistatic layer, and the pressure-sensitive adhesive layer.

According to the results in Table 1, it was confirmed that occurrence of rainbow unevenness was suppressed and thus the appearance inspection was carried out precisely owing to use of polyester films themselves having the degree of orientation adjusted in a specified range as a substrate in Examples 1 and 2. On the other hand, it was confirmed that occurrence of rainbow unevenness was observed and the precision of appearance inspection was lowered owing to use of a substrate itself having the degree of orientation out of the specified range in Comparative Example 1.

## Claims

1. A surface protecting film comprising a pressure-sensitive adhesive layer on at least one surface of a substrate, wherein the substrate is a polyester film and the polyester film has a degree of orientation in the width direction of 1.5 m in a range of 75 to 90°.

2. The surface protecting film according to claim 1, wherein the degree of orientation is in a range of 75 to 90°.

3. The surface protecting film according to claim 1 or 2, having the total thickness of 5 to 150 $\mu$m.

4. The surface protecting film according to any one of claims 1 to 3, wherein the pressure-sensitive adhesive layer is formed by using an acryl-based pressure-sensitive adhesive.

5. The surface protecting film according to any one of claims 1 to 4, wherein the substrate has an antistatic layer on a surface reverse to the surface having the pressure-sensitive adhesive layer.

6. An optical member protected with the surface protecting film according to any one of claims 1 to 5.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3929214 B

- JP 2936688 B

**Non-patent literature cited in the description**

- Synthesis and Design of Acrylic Resin and Development of New Applications. Publishing Department of Chuo Keiei Kaihatsu Center

- Polymer Handbook. John Wiley & Sons